# EUROPÄISCHE PATENTSCHRIFT

(11) **EP 0 621 083 B1**
(45) Veröffentlichungstag und Bekanntmachung des Hinweises auf die Patenterteilung: **17.07.1996**
(21) Anmeldenummer: 94810089.6
(22) Anmeldetag: 16.02.1994
(51) Int. Cl.: B05C 17/005

(54) **Vorrichtung zum Entleeren von Kartuschen**
Device for emptying cartridges
Dispositif pour vider des cartouches

(30) Priorität: 20.04.1993 DE 4312740
(43) Veröffentlichungstag der Anmeldung: 26.10.1994
(73) Patentinhaber: Gurit-Essex AG, CH-8807 Freienbach (CH)
(72) Erfinder: Welsch, Jörn, D-5014 Kerpen 3 (DE)
(74) Vertreter: Rottmann, Maximilian R.

(56) Entgegenhaltungen:
- WO-A-89/05189
- US-A- 3 952 920
- US-A- 5 104 005

## Beschreibung

Die Erfindung betrifft eine Vorrichtung zum gleichzeitigen Entleeren von zwei mit je einem Auspresskolben versehenen Kartuschen gemäss dem Anspruch 1.

In Kartuschen der hier zur Rede stehenden Art werden üblicherweise Substanzen wie beispielsweise Klebstoffe, Dichtungsmassen, Beschichtungsmassen und dergleichen aufgenommen. Bei sogenannten 2-Komponenten Systemen ist es üblich, dass zwei verschiedene Substanzen aus zwei verschiedenen Kartuschen miteinander vermischt werden, wobei diese Mischung vorzugsweise Eigenschaften aufweist, die mit nur einer Substanz allein nicht oder nur schwerlich erreicht werden könnten. Beispielsweise können auf diese Weise schnell aushärtende Klebstoffe erzeugt werden, welche unmittelbar nach dem Vermischen eine chemische Reaktion eingehen und daher schnell aushärten.

Zum Entleeren von solchen Kartuschen sind beispielsweise sogenannte Handpistolen bekannt. Diese Handpistolen sind in Ausführungen zur Aufnahme von einer oder von zwei Kartuschen erhältlich. Die Entleerung der Kartuschen erfolgt durch Betätigen eines Handgriffs, welcher in eine Zahnstange, bei Doppelpistolen in zwei Zahnstangen, eingreift und diese schrittweise nach vorne schiebt. Die Zahnstange ihrerseits betätigt einen in die Kartusche eingelassenen Kolben, welcher die in der Kartusche aufgenommene Substanz bzw. Komponente, über die am vorderen Ende der Kartusche vorhandene Öffnung, nach aussen presst. Nachteilig bei diesen Handpistolen ist, dass Kartuschen mit hochviskosem Inhalt nur sehr schwer entleert werden können, da die Übersetzung zwischen dem Handgriff und der Zahnstange sehr direkt ausgelegt ist und dadurch die von Hand aufzubringende Kraft entsprechend gross ist. Zudem ist die Mechanik bei diesen Handpistolen nicht für hohe Kräfte ausgelegt. Praktisch unmöglich wird das Entleeren von Kartuschen mit einer solchen bekannten Handpistole, wenn gleichzeitig zwei Kartuschen mit hochviskosen Komponenten entleert werden sollen. Sollen diese beiden Komponenten schliesslich noch in einer statischen Mischeinrichtung miteinander homogen vermischt werden, so kann die dafür notwendige Kraft auf keinen Fall mehr mit einer solchen Handpistole, wie vorgängig beschrieben, aufgebracht werden.

Aus der US-4 485 944 ist eine Vorrichtung zum Entleeren von einer Kartusche bekannt. Diese Vorrichtung weist einen Rahmen mit einem endseitig angebrachten Innengewinde auf. Zum Auspressen von Kartuschen ist eine von Hand betätigbare Gewindestange mit einer endseitig angebrachten Druckplatte vorgesehen, welche mit dem Innengewinde des Rahmens zahnt. Der Rahmen weist zudem einen Längsschlitz auf, der diesen in seinem hinteren Bereich mitsamt dem Innengewinde zweiteilt. In diesem Längsschlitz ist ein verschiebbarer Keil geführt, der den Rahmen in seinem hinteren, zweigeteilten Bereich auseinanderdrückt, sobald der Keil nach vorne geschoben wird. Durch ein Verschieben des Keils nach vorne wird der Rahmen im Bereich seines Innengewindes auseinandergedrückt, so dass die Gewindestange nicht mehr mit dem Innengeweinde zahnt. Dadurch kann die Gewindestange frei in den Rahmen hineingeschoben bzw. daraus entfernt werden. Soll jedoch die Gewindestange mit dem Innengewinde zahnen, so wird der Keil nach hinten geschoben bzw. entfernt. Über den Rahmen wird anschliessend im Bereich des Innengewindes eine Kappe gestülpt, so dass der Rahmen in diesem Bereich nicht mehr auseinandergedrückt werden kann. In diesem Zustand kann die Gewindestange kraftschlüssig in den Rahmen hineinbewegt und eine darin aufgenommene Kartusche ausgepresst werden. Nachteilig an dieser Vorrichtung ist, dass sie sehr aufwendig aufgebaut und daher teuer in der Herstellung ist. Im weiteren eignet sich die Vorrichtung nur zur Aufnahme einer einzelnen Kartusche und ist ausserdem umständlich zu bedienen.

Aus der WO 89/05189 ist eine Vorrichtung zur Abgabe eines Mehrkomponenten-Klebstoffes bekannt. Bei dieser Vorrichtung sind mehrere, röhrenförmige Kartuschen-Aufnahmebehälter vorgesehen, welche zu einer Einheit zusammengeschweisst sind. Diese Einheit verügt zudem über eine zentrale, mit einem Gewinde versehene Büchse sowie eine aussen an einem der Aufnahmebehälter angeordnete Klammer. Zum Entleeren der einzelnen, in die Aufnahmebehälter einzuschiebenden Kartuschen ist eine Auspressvorrichtung vorgesehen, welche am Bügel eingehängt werden kann. Die Auspressvorrichtung weist eine von Hand über eine Kurbel betätigbare, zentrale Gewindestange auf. An dieser Gewindestange ist zudem ein Bügel abgestützt, an welchem eine mit der Anzahl der Kartuschen übereinstimmende Anzahl Stössel zum Auspressen der Kartuschen angeordnet sind. Im weiteren ist eine Halteplatte vorgesehen, welche mit Ausnehmungen zur Aufnahme der einzelnen Kartuschen versehen ist. Diese Halteplatte dient dem Zusammenhalten und Fixieren der einzelnen Kartuschen gegenüber den Kartuschen-Aufnahmebehältern. Das Auspressen der Kartuschen erfolgt in bekannter Weise, indem die Gewindestange in die Büchse eingeführt wird und die Stössel durch Drehen der Gewindestange nach vorne bewegt werden. Nachteilig an einer derartigen Vorrichtung ist, dass sie umständlich zu bedienen sowie aufwendig und teuer in der Herstellung ist.

Bei einer Variante der vorgängig angeführten Vorrichtung (WO 89/05189) ist vorgesehen, die röhrenförmigen Kartuschen-Aufnahmebehälter auf der Rückseite geschlossen auszuführen. Zum Fixieren der einzelnen Kartuschen in der Vorrichtung sind zwei u-förmig ausgebildete Bügel vorgesehen, welche schwenkbar an den Kartuschen-Aufnahmebehältern angeordnet sind. Um die empfindliche Gewindestange, beispielsweise beim Transport, vor Beschädigungen zu schützen und auf ein möglichst kompaktes Mass zu bringen, muss die Gewindestange jeweils in die Kartuschen-Aufnahmebehälter hineingedreht werden. Damit die Vorrichtung danach wieder in Betrieb genommen werden kann, muss zuerst die Gewindestange wieder ganz herausgedreht werden.

Es ist somit die Aufgabe der Erfindung, eine Vorrichtung zum gleichzeitigen Entleeren von zwei mit je einem Auspresskolben versehenen Kartuschen derart zu verbessern, dass sie einfach zu bedienen ist, dass sie sehr schnell und einfach auf ein kompaktes Mass gebracht werden kann und dass sie danach sehr schnell und einfach wieder in den einsatzbereiten Zustand gebracht werden kann.

Diese Aufgabe wird durch eine Vorrichtung gelöst, welche die im Patentanspruch 1 aufgeführten Merkmale aufweist.

Bevorzugte Ausführungsformen der Erfindung sind in den abhängigen Ansprüchen 2 bis 4 umschrieben.

Dadurch, dass die Gewindestange über ein Abstützgelenk nur in der einen Richtung kraftschlüssig am Rahmen abgestützt ist, kann die Gewindestange zusammen mit den Stösseln in der anderen Richtung in das Innere des Rahmens hineingeschoben werden. Dies ermöglicht es, die

Vorrichtung auf eine sehr kompakte Grösse, beispielsweise zur Lagerung oder für den Transport, zu bringen. Um die Vorrichtung danach wiederum in Betriebsbereitschaft zur Aufnahme und zum Auspressen der Kartuschen zu versetzen, kann die Gewindestange anschliessend durch eine simple Zugbewegung wieder nach aussen gezogen werden, bis sie sich in der Drehlagerung wieder einseitig abstützt.

Eine bevorzugte Ausführung der Vorrichtung sieht einen Rahmen vor, der an seiner Vorderseite zum Anbringen einer Mischeinrichtung ausgebildet ist. Durch eine solchermassen ausgebildete Vorrichtung wird eine komplettes Zweikomponenten-Verarbeitungssystem geschaffen, mittels welchem zwei Komponenten aus je einer Kartusche ausgepresst, miteinander vermischt und das Endprodukt anschliessend direkt an die Verbrauchsstelle aufgetragen und verarbeitet werden kann.

Eine weitere Variante der Vorrichtung sieht zudem vor, dass diese aus mehreren, durch den Benutzer zusammenfügbaren Einzelteilen aufgebaut ist. Durch eine solche Ausführungsform kann die Vorrichtung besonders platzsparend in einer Verpackung untergebracht werden.

Nachfolgend wird ein Ausführungsbeispiel der Erfindung anhand einer Zeichnungen näher erläutert. In dieser Zeichnung zeigt:
Fig. 1 eine Draufsicht auf die Vorrichtung in teilweise geschnittener Darstellung, und
Fig. 2 eine Seitenansicht der Vorrichtung gemäss Fig. 1.

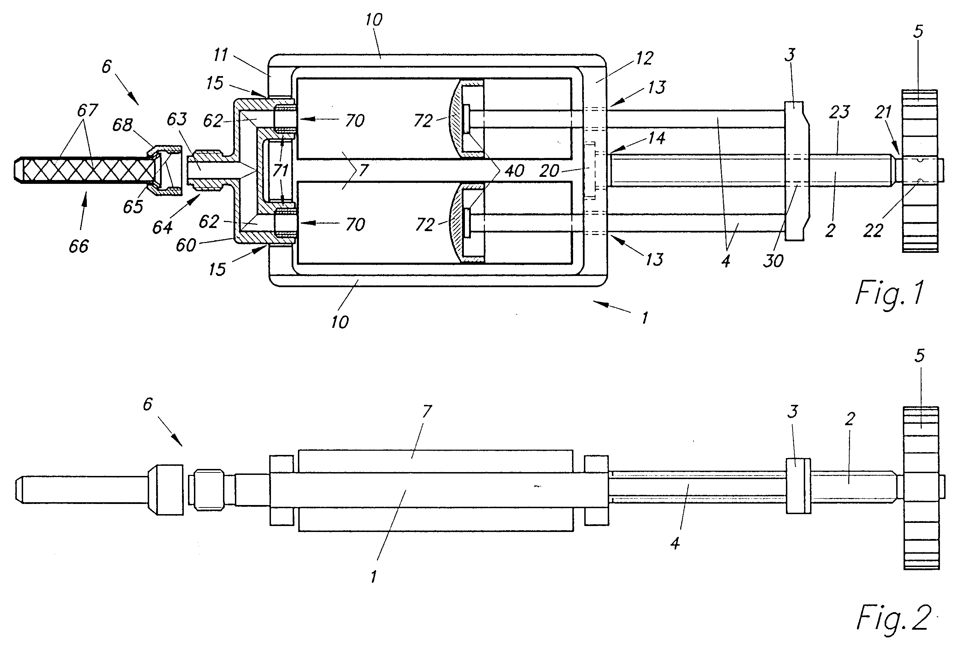

In der Fig. 1 ist die Vorrichtung in einer Draufsicht dargestellt. Die Vorrichtung besteht dabei im wesentlichen aus einem Rahmen 1, einer Gewindestange 2, einem Bügel 3 mit zwei daran befestigten Stösseln 4, einen an der Gewindestange 2 aufgesteckten Handrad 5 sowie einer aus einem T-förmigen Verbindungsteil 60 und einem daran anschraubbaren Mischer 66 bestehenden Mischeinrichtung 6. Im weiteren sind zwei in den Rahmen 1 eingesetzte Kartuschen 7 eingezeichnet, wobei vorzugsweise in jeder dieser beiden Kartuschen 7 eine Komponente eines sogenannten 2-Komponenten-Systems enthalten ist. Durch eine homogene Vermischung dieser beiden Komponenten entsteht schliesslich ein fertiges Endprodukt, wie beispielsweise ein schnell aushärtender Klebstoff. In dieser Darstellung sind die Mischeinrichtung 6 sowie die beiden Kartuschen 7, der besseren Verständlichkeit und Übersichtlichkeit wegen, in einem Längsschnitt dargestellt. Die wichtigsten verdeckten Linien sind zudem unterbrochen eingezeichnet.

Der Rahmen 1 weist eine im wesentlichen rechteckige Grundform mit zwei Längsseiten 10 und zwei dazu erhöhten Stirnseiten 11, 12 auf, wobei in die hintere Stirnseite 12 zwei Durchführungen für die beiden Stössel 4 in Form von je einer Bohrung 13, sowie ein aus einer stufenförmigen Bohrung bestehendes Abstützgelenk 14, zum Abstützen der Gewindestange 2, eingelassen sind. Die vordere Stirnseite 11 weist zudem zwei U-förmige Schlitze 15 zur Aufnahme des Verbindungsstücks 60 im Bereich der beiden Austrittsnasen 71 der Kartuschen 7 auf. Die Gewindestange 2 weist auf ihrer Vorderseite einen umlaufenden Bund 20 auf, währenddem sie im Bereich ihres hinteren Endes quadratisch 21 und in den Aussenmassen kleiner als im Bereich des eigentlichen Gewindes 23 ausgebildet ist. Im Bereich ihres quadratischen Endes 21 besitzt sie eine umlaufende Nut 22, an welcher der Handgriff 5 eingerastet und dadurch fixiert werden kann. Das Aussengewinde 23 der Gewindestange 2 geht vom quadratischen Ende 21 aus und läuft im Bereich des endigen Bundes 20 aus. Der Bügel 3 besitzt ein zentrales, mit der Gewindestange 2 korrespondierendes Gewinde 30. Die beiden Stössel 4 besitzen jeweils an ihrem vorderen Ende einen umlaufenden Bund 40 und sind mit ihren hinteren Enden am Bügel 3 befestigt.

Die im Schnitt dargestellten Kartuschen 7 sind bekannt, weshalb hier nur auf deren wesentliche Merkmale eingegangen wird. Die vorzugsweise aus Aluminium oder Kunststoff gefertigten Kartuschen 7 besitzen auf ihrer Vorderseite eine Öffnung 70, welche üblicherweise von einer Membrane verschlossen ist und welche von der mit einem Gewinde versehenen Austrittsnase 71 umfasst wird. Im weiteren weisen solche Kartuschen 7 einen Auspresskolben 72 auf, welcher die Kartuschen 7 nach hinten verschliesst. Dieser Auspresskolben 72 ist durch ein Betätigungsorgan nach vorne gegen die Austrittsöffnung 70 verschiebbar.

Das Verbindungsteil 60 der Mischeinrichtung 6 ist T-förmig ausgebildet und dient dem Zusammenführen der in den beiden Kartuschen 7 aufgenommenen Komponenten. Dazu weist es auf seiner Hinterseite zwei Innengewinde auf, die mit den an den Kartuschennasen 71 angebrachten Aussengewinden korrespondieren. Von diesen Gewinden führen Kanäle 62 durch das Innere des Verbindungsstücks 60, welche im vorderen Bereich zusammengeführt werden und in einem gemeinsamen, nach aussen führenden Kanal 63 münden. Im vorderen Bereich ist ein Aussengewinde 64 angebracht. Im weiteren sind auch Ausführungen von Verbindungsstücken 60 vorgesehen, in welchen die beiden Komponenten, beispielsweise durch einen Trennsteg, bis zum Austreten aus der Kartusche getrennt sind. Dies hat den Vorteil, dass bei einem längeren Unterbruch bei der Verarbeitung der Komponenten, lediglich der Mischer 66 ausgetauscht werden muss, da die beiden Komponenten im Verbindungsstück 60 noch nicht miteinander in Berührung gekommen sind uns somit auch noch nicht reagiert haben.

Der Mischer 66 selber weist mehrere Mischschikanen 67 auf und kann als statischer Mischer zum homogenen Vermischen der beiden Komponenten ausgebildet sein. Dieser Mischer 66 kann mittels einer Überwurfmutter 68 mit Innengewinde 65 auf das Verbindungsstück 60 aufgeschraubt werden. Solche Mischer 66 mit Überwurfmutter 68 sind bekannt, weshalb an dieser Stelle nicht näher darauf eingegangen werden muss.

Nachfolgend wird eine bevorzugte Reihenfolge beim Zusammenstellen der Vorrichtung sowie deren Funktionsweise näher erläutert.In der Ausgangsstellung befindet sich der Bügel 3 am hinteren Ende der Gewindestange 2 und ist zusammen mit dieser in den Rahmen 1 hineingeschoben. Die beiden Kartuschen 7 sind dabei natürlich noch nicht in die Vorrichtung eingesetzt. In einem ersten Schritt werden bei beiden Kartuschen 7 die Membrane, welche die Austrittsöffnung 70 verschliesst, durchstossen und die Kartuschen 7 danach in das Verbindungsstück 60 eingeschraubt. Anschliessend wird der Mischer 66 auf das Verbindungsstück 60 geschraubt. Danach wird die Gewindestange 2 zusammen mit dem Bügel 3 und den beiden Stösseln 4 nach hinten gezogen. Dadurch können jetzt die beiden Kartuschen 7 in den Rahmen 1 eingesetzt werden. Nun wird mittels des Handgriffs 5 die Gewindestange 2 gedreht, wodurch die beiden Stössel 4 nach vorne geschoben werden. Die Gewindestange 2 wird vorzugsweise so weit hinein gedreht, bis die Stössel 4 bzw. deren Bund 40 am Boden der Ausstosskolben 72 aufstehen. Dreht man nun die Gewindestange 2 über den Handgriff 5 weiter, so werden die beiden Stössel 4 und damit auch die Auspresskolben 72 nach vorne geschoben. Durch die beiden Auspresskolben 72 werden die in den Kartuschen 7 eingeschlossenen Komponenten verdrängt, so dass diese durch die Austrittsöffnungen 70 der Kartuschen 7 entweichen. Im Zwischenstück 60 werden die beiden Komponenten zusammengeführt und danach im Mischer 66 bzw. in dessen Mischschikanen 67 schliesslich vermischt, so dass die beiden Komponenten als fertig durchmischte Masse aus der Mischeinrichtung 6 austreten. Bei hochviskosen Komponenten ist die für das Auspressen der Kartuschen 7 und das Durchmischen der Komponenten notwendige Kraft relativ hoch. Diesem Umstand kann durch eine kleine resp. angepasste Gewindesteigung 23 der Gewindestange 2 auf sehr einfache Art Rechnung getragen werden. Im weiteren ist durch das zentrale Angreifen der Kraft zwischen der Gewindestange 2 und dem Rahmen 1 eine gleichmässige Kraftverteilung von den Stösseln 4 über den Bügel 3 auf die Gewindestange 2 gewährleistet.

Die zuvor geschilderte Reihenfolge beim Zusammenstellen der Vorrichtung ist natürlich nicht zwingend und kann im Rahmen der Möglichkeiten beliebig verändert werden.

In der Fig. 2 ist die Vorrichtung in einer Ansicht von der Seite dargestellt, wobei die verdeckten Linien in dieser Figur jedoch nicht eingezeichnet sind. Aus dieser Darstellung sind wiederum die Mischeinrichtung 6, der Rahmen 1, die eine Kartusche 7, der eine Stössel 4, der Bügel 3, die Gewindestange 2 sowie das Handrad 5 ersichtlich.

Eine Ausführungsform gemäss den Fig. 1 und 2 hat den Vorteil, dass durch ein am Rahmen 1 angeordnetes Abstützgelenk 14 für die Gewindestange 2 die beiden Kartuschen 7 im Rahmen 1 sehr nahe beieinander liegen können, so dass dadurch die Vorrichtung mitsamt dem Zwischenstück 60 sehr kompakt ausfällt. Durch die kurzen Wege im Zwischenstück 60 werden zudem die Reibungswiderstände beim Entleeren der Kartuschen 7 minimiert. Ein in der geschilderten Art ausgeführtes Abstützgelenk 14 hat im weiteren den Vorteil, dass die Gewindestange 2 zusammen mit dem Bügel 3 und den beiden Stösseln 4 in den Rahmen 1 hineingeschoben werden kann, und dass die Vorrichtung dadurch auf ein noch kompakteres Mass, beispielsweise zum Verpacken, gebracht werden kann.

Die vorgängig erläuterte Ausführungsform stellt ein einfaches, zuverlässiges und preisgünstig herzustellendes Hilfsmittel zum Entleeren von Kartuschen 7 und zum Durchmischen der Kartuscheninhalte dar. Die auf diese Weise homogen vermischten Komponenten treten schliesslich verarbeitungsfertig aus der Mischeinrichtung 6 aus und können von da direkt auf die Verarbeitungsstelle aufgetragen werden. Durch ein Anpassen der Steigung des Gewindes 23 oder auch des Durchmessers des Handrads 5 kann zudem die Übersetzung der Kraft vom Handrad 5 auf die beiden Stössel 4 sehr einfach variiert werden, so dass auch hochviskose Komponenten, ohne grossen Kraftaufwand seitens des Benutzers, aus den Kartuschen 7 ausgepresst werden können.

Die Vorrichtung kann auch dahingehend ausgeführt werden, dass im Rahmen Kartuschen unterschiedlicher Grösse, vorzugsweise unterschiedlichen Durchmessers, aufgenommen werden können. Dadurch kann das Mischungsverhältnis und damit die Eigenschaften des Endprodukts beeinflusst werden.

## Patentansprüche

1. Vorrichtung zum gleichzeitigen Entleeren von zwei mit je einem Auspresskolben (72) versehenen Kartuschen (7), welche Vorrichtung einen Rahmen (1) zur Aufnahme der Kartuschen (7), eine von Hand drehbare Gewindestange (2) sowie einen Bügel (3) mit zwei daran angeordneten Stösseln (4) zum Betätigen der Auspresskolben (72) aufweist, wobei der Bügel (3) über ein Innengewinde (30) mit der Gewindestange (2) verbunden und letztere über ein Abstützgelenk (14) in der einen Richtung kraftschlüssig am Rahmen (1) abgestützt ist, so dass die Gewindestange (2) zusammen mit den Stösseln (4) in der anderen Richtung in das Innere des Rahmens (1) hineinschiebbar ist.

2. Vorrichtung nach Anspruch 1, dadurch gekennzeichnet, dass das Abstützgelenk (14) durch eine im Rahmen (1) angebrachte, stufenförmige Bohrung sowie einen auf der Vorderseite der Gewindestange (2) angebrachten Bund (20) gebildet ist.

3. Vorrichtung nach Anspruch 1 oder 2, dadurch gekennzeichnet, dass der Rahmen (1) an seiner Vorderseite zum Anbringen einer Mischeinrichtung (6) ausgebildet ist, welche ein Vermischen der beiden Komponenten ermöglicht.

4. Vorrichtung nach einem der vorhergehenden Ansprüche, dadurch gekennzeichnet, dass diese aus mehreren durch den Benutzer zusammenfügbaren Einzelteilen (1, 2, 3, 4, 5, 6) aufgebaut ist.

## Claims

1. A device for the simultaneous emptying of two cartridges (7) provided with one election piston (72) each, which device has a frame (1) for receiving the cartridges (7), a threaded rod (2) rotatable by hand, as well as a yoke (3) with two plungers (4) arranged thereon for actuating the ejection pistons (72), in which arrangement the yoke (3) is connected by means of an internal thread (30) to the threaded rod (2), and the latter is supported by means of a supporting joint (14) on the frame (1) in one direction with a force fit, so that the threaded rod (2), together with the plungers (4) can be pushed in the other direction into the inside of the frame (1).

2. A device according to claim 1, characterized in that the supporting joint (14) is formed by a step-shaped bore arranged in the frame (1), as well as a collar (20) arranged at the front side of the threaded rod (2).

3. A device according to claim 1 or 2, characterized in that the frame (1) is designed at its front side for attaching a mixer device (6), which allows the two constituents to be mixed.

4. A device according to one of the preceding claims, characterized in that it is composed of several individual parts (1, 2, 3, 4, 5, 6) that can be fitted together by the user.

## Revendications

1. Dispositif pour vider simultanément deux cartouches (7) munies chacune d'un piston d'expulsion (72), le dispositif comprenant un cadre pour recevoir les cartouches (7), une tige filetée (2) qu'on peut faire tourner à la main ainsi qu'une traverse (3) dotée de deux poussoirs (4) qui y sont montés pour actionner les pistons d'expulsion (72), la traverse (3) étant connectée par un filetage interne (30) à la tige filetée (2) et cette dernière s'appuyant sur le cadre (1) par l'intermédiaire d'un appui articulé (14) avec blocage par force dans une direction, de sorte que la tige filetée (2) peut rentrer par translation, avec les poussoirs (4), dans l'autre direction à l'intérieur du cadre (1).

2. Dispositif selon la revendication 1, caractérisé en ce que l'appui articulé (14) est constitué d'un trou à épaulements pratiqué dans le cadre (1) ainsi que d'un rebord (20) prévu sur le côté avant de la tige filetée (2).

3. Dispositif selon la revendication 1 ou 2, caractérisé en ce que le cadre (1) est conformé sur son côté antérieur pour adjoindre un dispositif de mélange (6), qui permet d'effectuer un mélange des deux composants.

4. Dispositif selon l'une quelconque des revendications précédentes, caractérisé en ce qu'il est construit en plusieurs unités (1, 2, 3, 4, 5, 6) assemblables par l'utilisateur.
